# EUROPEAN PATENT APPLICATION

(11) **EP 0 798 675 A2**
(43) Date of publication of application: **01.10.1997**
(21) Application number: 97302227.0
(22) Date of filing: 01.04.1997
(51) Int. Cl.: G07F 17/16, G06K 19/07, G07F 7/10

(54) **Non-contact communications system**

(30) Priority: 29.03.1996 JP 103388/96
(71) Applicant: NEC Corporation, Minato-ku, Tokyo 108-01 (JP)
(72) Inventor: Shibuya, Atsushi, Minato-ku, Tokyo 108-01 (JP)
(74) Representative: Abnett, Richard Charles

(57) **Abstract**

A non-contact communication system includes a wire-less terminal (101) and a plurality of base stations (201-204). The wire-less terminal is in the form of a card, and stores a selection code and receives desired information selected from a plurality of kinds of information according to the selection code. The desired information is selected by the wire-less terminal comparing a received code to the selection code.
Alternatively, the desired information is selected by the base station using a selection code received from the wire-less terminal.

## Description

### BACKGROUND OF THE INVENTION

### 1. Field of the invention

The present invention generally relates to wire-less communications system, and in particular to a non-contact communications system which provides non-contact communications between a base station and a wire-less terminal such as a wire-less card.

### 2. Description of the Related Art

There have been proposed a variety of non-contact card systems using smart cards or IC (integrated circuit) cards each incorporating a wireless data communication function. Such a non-contact card system will be widely used in the fields of identification systems and automatic ticket gate systems. Further, the IC card is also used to store and display information such as locations, starting and ending times, or transportation guide. Conventional IC card systems like these have been disclosed in, for example, Japanese Patent Unexamined Publication Nos. 3-62290 and 4-186493.

The known non-contact card system, however, is restricted to the exchange of a specified kind of information. For example, in the case of automatic ticket gate systems, the expiration date of a commuter ticket or transportation guide information is transmitted. In the case of identification systems, ID numbers are read by the gate machine. Further, in the case of public relations systems, PR information is transmitted in only one direction from a base station to IC cards. In other words, the user is always a receiver without freedom of choice.

### SUMMARY OF THE INVENTION

According to the present invention, a wire-less terminal stores desired selection information and receiving desired information selected from the plurality of kinds of information according to the desired selection information. The desired information may be selected by either the wire-less terminal or a base station.

The base station may store information in a database. The base station transmits a selection code request to the wire-less card which is in a service area of the base station. When receiving a response to the selection code request received from the wireless card, the base station retrieves desired information from the database according to at least one desired selection code included in the response, and then transmits the desired information to the wireless card. On the other hand, the wireless card previously stores at least one desired selection code, transmits the response to the base station in response to the selection code request received from the base station, the response including at least one desired selection code, and receiving the desired information from the base station.

### BRIEF DESCRIPTION OF THE DRAWINGS

Fig. 1 is a schematic diagram showing a non-contact communications system according to the present invention;
Fig. 2 is a block diagram showing an internal circuit of a wireless card in a first embodiment of a non-contact communications system according to the present invention;
Fig. 3 is a block diagram showing an internal circuit of a base station in the first embodiment;
Fig. 4 is a diagram showing an example of information classification which is transmitted from a base station to an IC card;
Fig. 5 is a diagram showing another example of information classification which is transmitted from a base station to an IC card;
Fig. 6 is a diagram showing an example of a signal format which is transmitted and received;
Fig. 7A is a flowchart showing an operation of a base station according to a first embodiment of a non-contact communication method of the present invention;
Fig. 7B is a flowchart showing an operation of a wireless card according to the first embodiment of the non-contact communication method;
Fig. 8A is a flowchart showing an operation of a base station according to a second embodiment of the non-contact communication method of the present invention;
Fig. 8B is a flowchart showing an operation of a wireless card according to the second embodiment of the non-contact communication method;
Fig. 9 is a schematic diagram showing a part of internal circuit of a wireless card in a second embodiment of the non-contact communications system according to the present invention;
Fig. 10 is a schematic diagram showing a part of internal circuit of a base station in the second embodiment of the non-contact communications system;
Fig. 11A is a flowchart showing an operation of a base station according to a third embodiment of the non-contact communication method of the present invention; and
Fig. 11B is a flowchart showing an operation of a wireless card according to the third embodiment of the non-contact communication method.

### DETAILED DESCRIPTION OF THE PREFERRED EMBODIMENTS

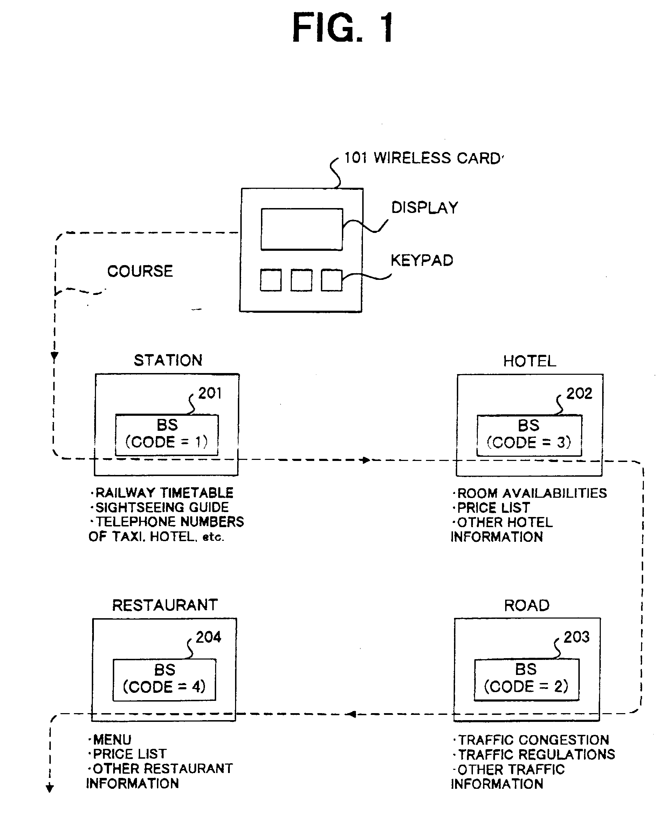

Referring to Fig. 1, it is assumed for simplicity that a non-contact communication system includes a wireless card 101 which is carried by a user and a plurality of base stations 201-204 which are located in a railroad station, a hotel, a road and a restaurant, respectively. Needless to say, a lot of base stations may be installed in different kinds of locations. Each base station forms a relatively small service area where the wireless card 101 can communicate with the base station.

When the user is in the service area of a base station, the base station can transmit information that the user needs in this place to the wireless card 101 as will be described later. More specifically, when located in the railroad station, the wireless card 101 receives information needed in that location, for example, a railway timetable, a sightseeing guide, telephone numbers of taxi, hotel and the likes. When located in a hotel, the wireless card 101 receives information, for example, room availabilities, price list, and other hotel information. When located in an entrance to a highway, the wireless card 101 receives information, for example, traffic congestion, traffic regulations and other traffic information. And when located in an entrance to a restaurant, the wireless card 101 receives information, for example, a menu, a price list, and other restaurant information. In other words, the user carries only one wireless card to know a variety of information needed in respective locations. The details will be described hereinafter.

### FIRST EMBODIMENT

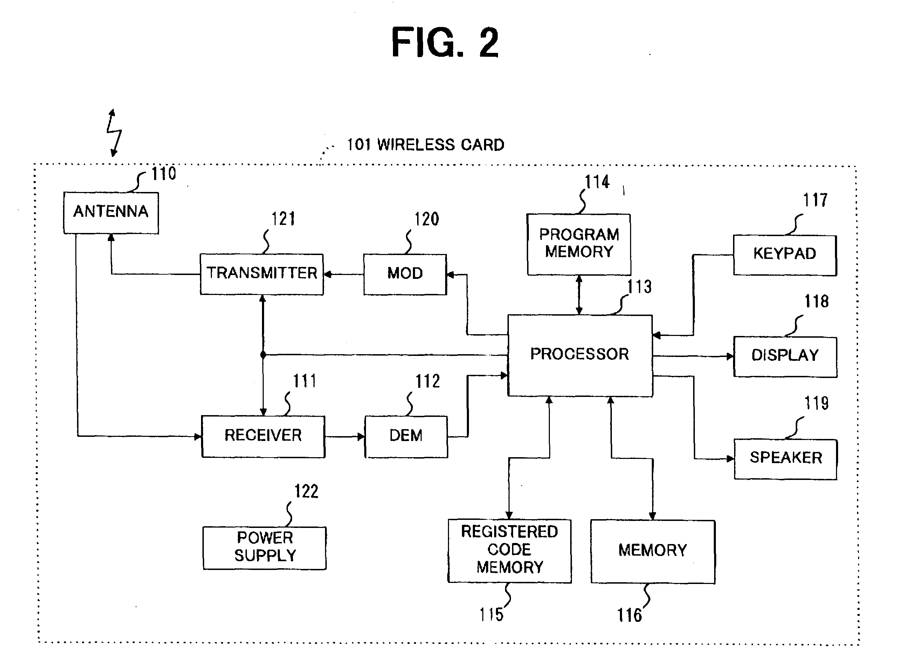

Referring to Fig. 2, a wireless card 101 has the following circuit configuration. An antenna 110 is connected to a receiver 111 which intermittently receives a radio signal from a base station. The radio signal is demodulated by a demodulator 112 into a baseband signal which is output as received data to a processor 113. The processor 113 performs control of the whole operations including the analysis of the received data according to a program stored in a program memory 114. As described later, the analysis of the received data is performed using registered codes and/or ID numbers which are previously stored in a registered code memory 115 by user's key operation. In cases where the received data includes necessary information, the received information is stored onto a memory 116.

A keypad 117 is used to input user's instructions including code registration. The keypad 117 may be push buttons, a ten-key pad, or a touch-sensitive keypad on a display 118. Under the control of the processor 117, the received information or other necessary data is displayed on the display 118 such as liquid-crystal display (LCD), and a speaker 119 informs the user of the information reception by beep sound or the like. In cases where the received information is sound information, it may be output by the speaker 119.

When necessary data such as ID number is transmitted to the base station, the processor 113 produces the transmission data by reading the ID number from the registered code memory 115. A modulator 120 modulates a carrier wave of a predetermined frequency according to the transmission data to produce a transmission signal. The modulation scheme may be frequency modulation. A transmitter 121 amplifies the transmission signal and transmits it to the base station through the antenna 110. A power supply 122 supplies power to all devices of the wireless card 101. The power supply 122 includes a power controller and a dry cell or a rechargeable battery. The receiver 111 and the transmitter 121 are power-controlled by the processor 113 to save battery power.

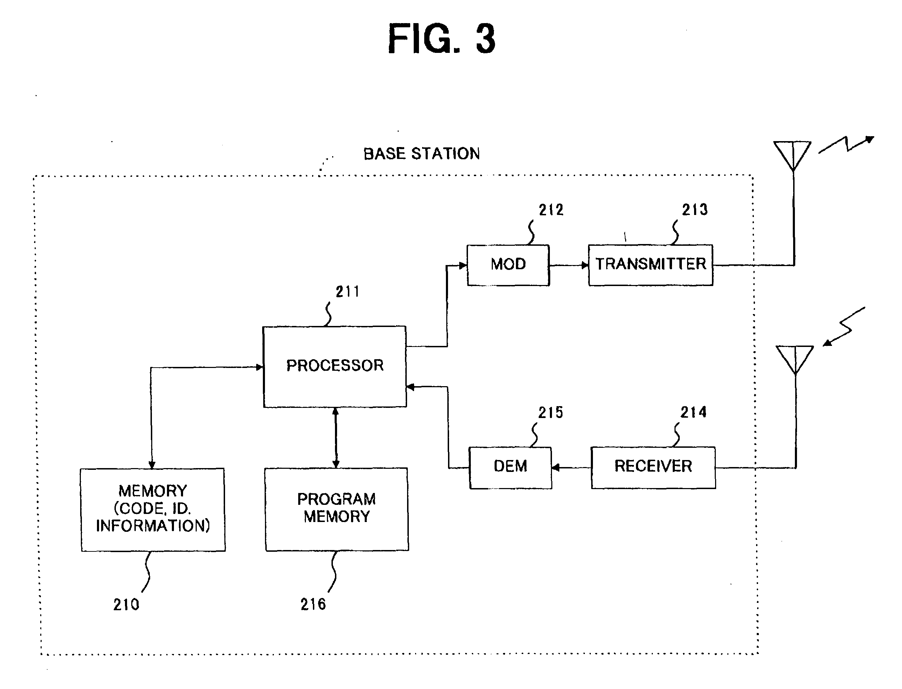

Referring to Fig. 3, a base station is provided with a data memory 210 which stores code data, ID data, and information to be transmitted to a wireless card 101 as necessary. A processor 211 performs control of the whole operations of the base station according to a program stored in a program memory 212. When data is transmitted to the wireless card 101, the processor 211 produces transmission data from the code data, the ID number and the information stored in the memory 210. A modulator 213 modulates a carrier wave of a predetermined frequency according to the transmission data to produce a transmission signal. The modulation scheme may be frequency modulation. A transmitter 214 amplifies the transmission signal and transmits it to the wireless card 101 through a transmission antenna.

On the other hand, when a receiver 215 receives a radio signal from the wireless card 101, a demodulator 216 demodulates the radio signal into a baseband signal which is output as received data to the processor 211. The processor 211 performs the analysis of the receive data and, as necessary, searches the memory 210 for information to be transmitted to the wireless card 101.

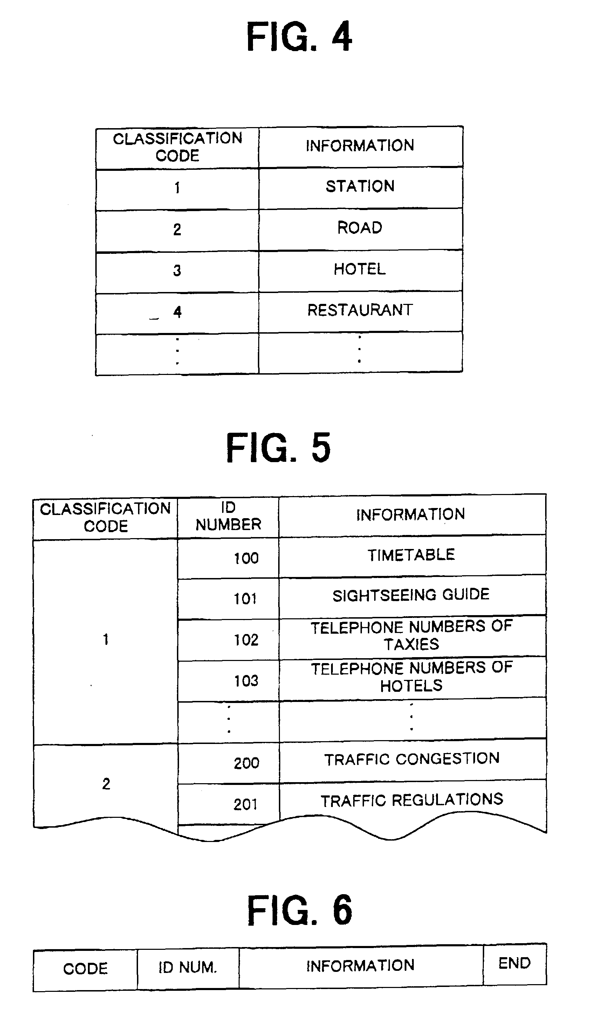

Referring to Fig. 4, the information transmitted in the non-contact card system is classified according to its purpose. Different classification codes are previously assigned to the categories of information, respectively. For example, as shown in the figure, the classification code (CODE=1) is assigned to the category of railway station, the classification code (CODE=2) is assigned to the category of road, the classification code (CODE=3) is assigned to the category of hotel, the classification code (CODE=4) is assigned to the category of restaurant and so forth.

Referring to Fig. 5, each category may be further classified into a plurality of kinds of information or subcategories to which identification numbers are assigned, respectively. For example, the category of railway station is further divided into a plurality of kinds of railway station information. The identification number (ID=100) is assigned to timetable information, the identification number (ID=101) is assigned to sightseeing guide information, the identification number (ID=102) is assigned to telephone numbers of taxis, the identification number (ID=103) is assigned to telephone numbers of hotels, and so forth. The identification codes as shown in Fig. 4 or Figs. 4 and 5 are stored in the respective memories 115 and 210 of the wireless card 110 and the base station to allow information selection in the side of the wireless card 101.

Referring to Fig. 6, the transmission signal which is transmitted and received between the wireless card 101 and a base station is comprises of a classification code (CODE), an ID number (ID), information, and an end code. The information may be the timetable, sightseeing guide, traffic information and the likes as shown in Figs. 4 and 5. The transmission signal may comprises of a classification code (CODE), information, and an end code. The information may be information regarding railway station, road, hotel, restaurant and so forth as shown in Fig. 4.

### BROADCAST

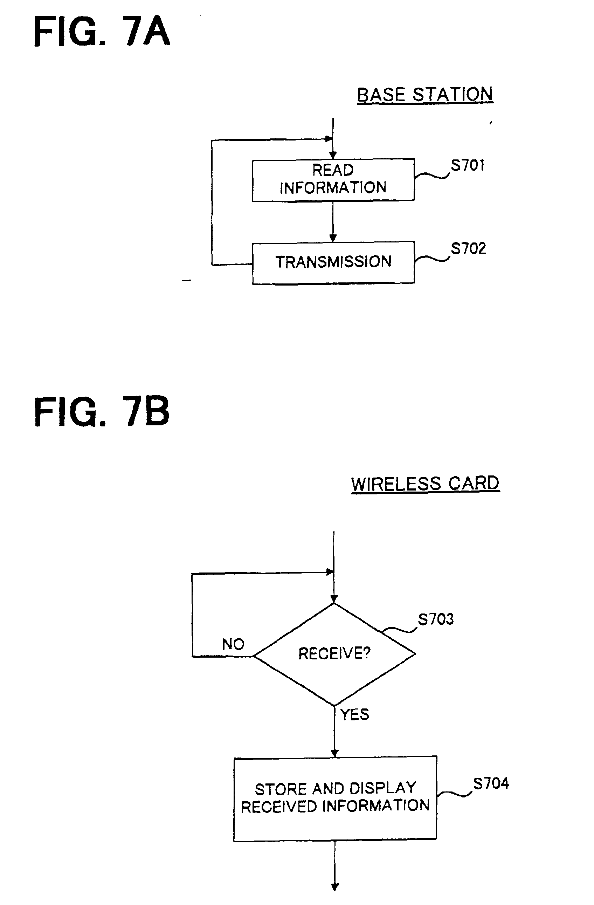

Referring to Figs. 7A and 7B, consider that a transmission signal of a base station is broadcast to all wireless cards located in its service area. As shown in Fig. 7A, the processor 211 of the base station reads information from the memory 210 (step S701) and periodically transmits it to the wireless cards (step S702). When receiving the information from the base station (step S703), the processor 111 of the wireless card 101 stores the information onto the memory 116 and displays it on the display 118 with making a beep sound. In this case, all data transmitted by the base station are received by all the wireless cards located in the serive area.

For example, the memory 210 of the base station placed in the railroad station stores information regarding railway station, and when the user carrying the wireless card 101 passes close by the base station of the railroad station, the wireless card 101 receives information including a railway timetable, a sightseeing guide, telephone numbers of taxi, hotel and the likes. Similarly, when the user carrying the wireless card 101 passes close by the base station placed in a hotel, the wireless card 101 receives information including room availabilities, price list, and other hotel information. It is the same with road and restaurant.

### INFORMATION SELECTION

To perform information selection in the side of the wireless card 101, the base station transmits a transmission signal including an identification code such as the classification code and/or ID number as described before.

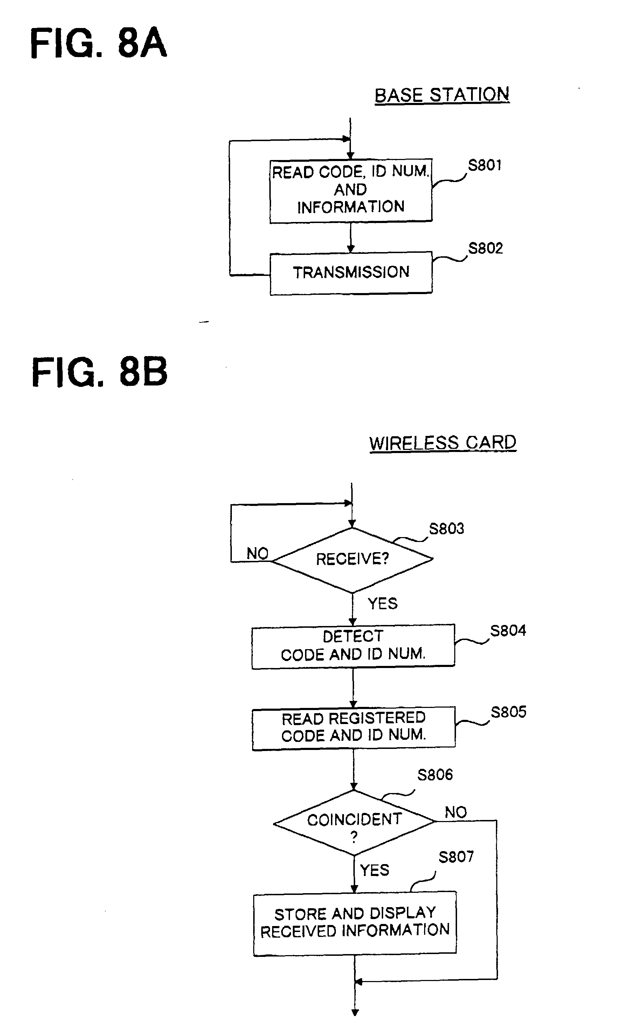

Referring to Figs. 8A and 8B, the processor 211 of the base station reads information together with a classification code and ID number from the memory 210 to produce a transmission signal (step S801). The transmission signal is periodically transmitted to the wireless cards located in the service area (step S802). When receiving the transmission signal from the base station (step S803), the processor 113 of the wireless card 101 detects the classification code and the ID number from the received data (step S804) and reads the registered code and ID number from the registered code memory 115 (step S805). And the processor 113 compares the received classification code and the ID number to the registered code and ID number (step S806). When they are coincident (YES of step S806), the received information is stored onto the memory 116 and is displayed on the display 118 depending on user's instructions. When they are not coincident (NO of step S806), the received information is not stored. Therefore, the wireless card 101 can receive and store only the information corresponding to registered code and ID number designated by the user.

In the case where the user previously registers two classification codes CODE=2 (road) and CODE=3 (hotel) in the registered code memory 115 and sequentially passes the base stations 201-204 in the order presented, only the information provided by the base stations 202 and 203 are stored in the memory 116 and the wireless card 101 informs the user of hotel information and traffic information. Similarly, in the case where the user previously registers the classification code CODE=1 (railroad station) and two ID numbers ID=100 (timetable) and ID=103 (telephone numbers of hotels) in the registered code memory 115, only the timetable and telephone numbers of hotels are stored and displayed when the user passes close by the base station 201. No information is provided when the user passes close by the other base stations 202-204.

### SECOND EMBODIMENT

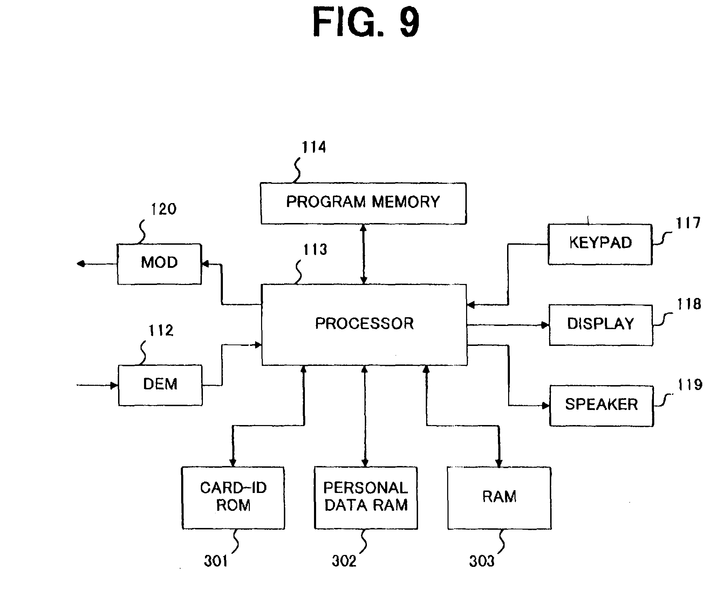

Referring to Fig. 9, where circuit blocks similar to those previously described with reference to Fig. 2 are denoted by the same reference numerals, a wireless card 101 is further provided with a card-ID memory 301, a personal data memory 302 and information memory 303. In this embodiment, the card-ID memory 301 stores the card-ID number which has been assigned to the wireless card 101. The personal data memory 302 stores personal data including attributes such as residential area, age and sex of the user and a purpose of movement such as travel. At the request of the base station, the processor 113 of the wireless card 101 produces a response signal from the personal data and transmits it to the base station. The purpose data of the personal data may be used as a keyword to retrieve necessary information in the base station.

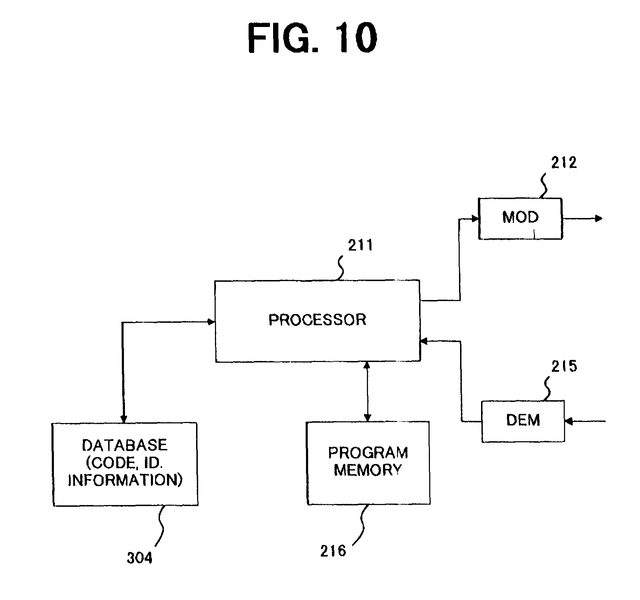

Referring to Fig. 10, where circuit blocks similar to those previously described with reference to Fig. 3 are denoted by the same reference numerals, a base station is provided with a database 304 storing data including code data, ID data, and information to be transmitted to the wireless card 101 as necessary. More specifically, the database 304 may be structured according to a plurality of keywords which are previously extracted from the stored information.

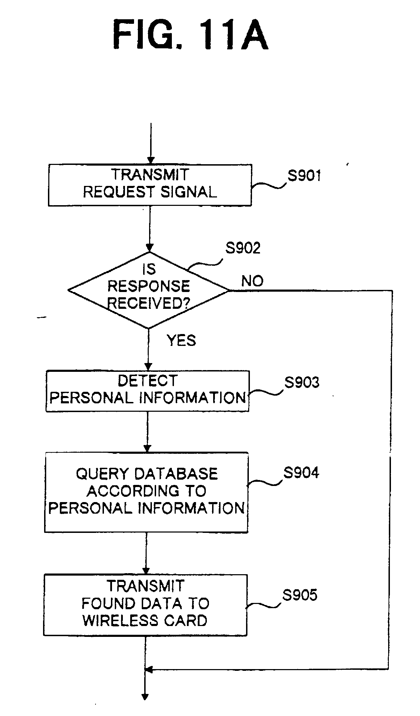

Referring to Fig. 11A, the processor 211 of the base station produces a request signal and periodically transmits it to the wireless cards located in the service area (step S901). When receiving a response signal from a wireless card (YES of step S902), the processor 211 detects the card-ID number and the personal data from the received data (step S903) and queries the database 304 according to the received personal data (step S904). When necessary information is found, the information is transmitted to the wireless card of the received card-ID number (step S905).

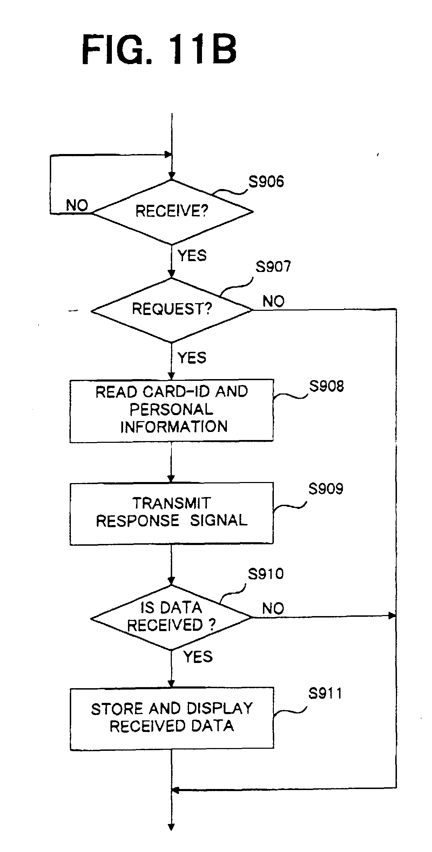

Referring to Fig. 11B, when receiving the request signal from the base station (YES of step S906 and YES of step S907), the processor 113 of the wireless card 101 reads the card-ID number and the personal data from the memory 301 and memory 302, respectively (step S908). Using these data, the processor 113 produces a response signal and transmits it to the base station (step S909). When the necessary information is received from the base station (YES of step S910), the information is stored and displayed as described before (step S911).

For example, when the user inputs 'travel' as a purpose through the keypad 117, the purpose data 'travel' is stored onto the personal data memory 302 together with other personal data. In the case where the user passes close by the base station 201 of the railroad station, the wireless card 101 receives the request signal from the base station 201. In response to the request, the wireless card 101 transmits the response signal including the card-ID and the personal data to the base station 201.

When receiving the response signal from the wireless card 101, the processor 211 of the base station 201 searches the database 304 according to the keyword 'travel' which was a registered purpose of movement. In this case, information regarding travel, such as sheet availabilities, timetable and sightseeing guide, will be found in the database 304. The found information is transmitted to the relevant wireless card 101.

## Claims

1. A method for selectively receiving a plurality of kinds of information, comprising the steps of:
a) storing desired selection information; and
b) receiving desired information selected from the plurality of kinds of information according to the desired selection information.

2. The method according to claim 1, wherein the step b) comprises:
receiving information and identification information from a base station, the identification information corresponding to the information which is one of the plurality of kinds of information;
comparing the identification information to the desired selection information; and
storing the information as the desired information when the identification information is coincident with the desired selection information.

3. The method according to claim 2, wherein the base station is one of a plurality of base stations which are classified into a plurality of kinds of base station which are located at different places, identification information being previously assigned to each kind of base station.

4. The method according to claim 2, wherein the identification information comprises a classification code and a sub-classification code, the base station is one of a plurality of base stations which are classified into a plurality of kinds of base station which are located at different places, a classification code being previously assigned to each kind of base station.

5. The method according to claim 1, further comprising the step of transmitting the desired selection information to a base station at the request of the base station,
wherein the desired information is received from the base station which selects the desired information from the plurality of kinds of information according to the desired selection information.

6. The method according to claim 5, wherein the desired selection information includes a predetermined identification number and personal information and the desired information is selected by the base station according to the personal information.

7. The method according to claim 1, wherein the desired selection information is input through a keypad and the desired information is displayed on screen.

8. A method for transferring information between a base station and a wireless card, comprising the steps of:
predetermining a plurality of identification codes each corresponding to a different kind of information;
at the base station,
transmitting information and an identification code corresponding to the information to the wireless card which is in a service area of the base station; and
at the wireless card,
previously storing at least one selection code; and
receiving the information when the identification code is coincident with a selection code.

9. The method according to claim 8, wherein the base station is one of a plurality of base stations which are classified into a plurality of kinds of base station which are located at different places, an identification code being previously assigned to each kind of base station.

10. The method according to claim 8, wherein the identification code comprises a classification code and a sub-classification code, the base station is one of a plurality of base stations which are classified into a plurality of kinds of base station which are located at different places, a classification code being previously assigned to each kind of base station.

11. A method for transferring information from a base station to a wireless card, comprising the steps of:
at the base station,
previously storing information in a database;
transmitting a selection code request to the wireless card which is in a service area of the base station;
retrieving desired information from the database according to at least one desired selection code included in a response to the selection code request received from the wireless card; and
transmitting the desired information to the wireless card,
at the wireless card,
previously storing at least one desired selection code;
transmitting the response to the base station in response to the selection code request received from the base station, the response including at least one desired selection code; and
receiving the desired information from the base station.

12. The method according to claim 11, wherein a desired selection code includes a predetermined identification number and personal information and the desired information is retrieved from the database according to the personal information.

13. A system comprising:
a plurality of base stations which are classified into a plurality of kinds of base station; and
a wireless terminal communicating with a base station when the wireless card is located in a service area of the base station,
the wireless terminal comprising:
a memory for storing desired selection information; and
a reception controller for receiving desired information selected from a plurality of kinds of information according to the desired selection information.

14. The system according to claim 13, wherein the reception controller comprises:
a receiver for receiving information from the base station, the information including identification information which corresponds to one of the plurality of kinds of information;
a controller for comparing the identification information to the desired selection information; and
a memory for storing the information as the desired information when the identification information is coincident with the desired selection information.

15. The system according to claim 14, wherein identification information is previously assigned to each kind of base station.

16. The system according to claim 14, wherein the identification information comprises a classification code and a sub-classification code, a classification code being previously assigned to each kind of base station.

17. The system according to claim 14, wherein
the base station comprises:
a database for storing information which is retrieved according to at least one keyword; and
a controller for transmitting a selection code request to the wireless card which is in a service area of the base station, searching the database for desired information according to at least one desired keyword included in a response to the selection code request received from the wireless card, and transmitting the desired information to the wireless card, and
the wireless card further comprises:
a communication controller for transmitting the response to the base station in response to the selection code request received from the base station, the response including the desired selection information which comprises at least one desired keyword, and receiving the desired information from the base station.

18. The system according to claim 17, wherein the desired selection information includes a predetermined terminal identification number and personal information and the desired information is retrieved from the database using the personal information as a keyword.

19. A wireless terminal in a system including a plurality of base stations which are classified into a plurality of kinds of base station, the wireless terminal comprising:
a communication controller communicating with a base station when the wireless card is located in a service area of the base station;
a keypad for inputting information;
a memory for storing desired selection information which is input through the keypad;
a reception controller for receiving desired information selected from a plurality of kinds of information according to the desired selection information; and
a display for displaying the desired information on screen.

20. A base station communicating with a wireless terminal which is in a service area of the base station, the base station comprising:
a database for storing information which is retrieved according to at least one keyword; and
a controller for transmitting a selection code request to the wireless card which is in a service area of the base station, searching the database for desired information according to at least one desired keyword included in a response to the selection code request received from the wireless card, and transmitting the desired information to the wireless card.
